Europäisches Patentamt

European Patent Office

Office européen des brevets

(11) Publication number: **0 142 474**
**A1**

## (12) EUROPEAN PATENT APPLICATION

(21) Application number: **84830002.6**

(22) Date of filing: **04.01.84**

(51) Int. Cl.⁴: **F 16 B 13/14**

(30) Priority: **24.10.83 IT 2333783 U**

(43) Date of publication of application:
**22.05.85 Bulletin 85/21**

(84) Designated Contracting States:
**AT BE CH DE FR GB LI NL SE**

(71) Applicant: **Invernizzi, Alma**
**Via Trieste, 23**
**I-28069 Trecate (Novara)(IT)**

(72) Inventor: **Invernizzi, Alma**
**Via Trieste, 23**
**I-28069 Trecate (Novara)(IT)**

(74) Representative: **Cicogna, Franco**
**Ufficio Internazionale Brevetti Dott.Prof. Franco Cicogna**
**Via Visconti di Modrone, 14/A**
**I-20122 Milano(IT)**

(54) Wall dowel.

(57) The wall dowel comprises a substantially tubular, cylindrical body (2), provided with a longitudinal slot (8) extending through the overall length of the body (2), and effective to be inserted into a hole (4) formed in the wall, the hollow or bore (5) of the body (2), therein a set screw may be engaged (7), having a first portion (6) of enlarged diameter ending with a frustum shaped tapering portion (6') effective to facilitate the insertion of the set screw (7).

Fig. 1

The present invention relates to a wall expansion small block, particularly for hollow tile walls and the like.

As it is known, several types of expansion blocks are presently commercially available, which generally consist of a cylindrical body provided, at one end thereof, with a small collar and including a pair of substantially semicircular wings or legs extending from the mentioned collar and effective to be inserted into a hole as formed in the wall.

By introducing a set screw, the mentioned two legs are caused to diverge from one another, with a substantially radial movement, thereby obtaining a good anchoring of the expansion small block in the wall.

While the hereinabove mentioned type of expansion block has afforded generally satisfactory results with the so-called solid walls, it is however of very poor performance as it is applied to the hollow tile walls since, as the set screw is applied, the mentioned legs are caused to diverge, thereby the set screw is able of engaging the small expansion block exclusively at the collar region.

Thus, the set screw may loose due to vibration, and disengage from the expansion block.

Another drawback of the known small expansion blocks is that the set screw, which is not firmly locked in the small block, because of the continuous movements it is subjected to, inevitably produces an enlarged zone at the thread engagement region and accordingly is susceptible to disengaging.

Accordingly, the task of the present invention is to overcome the hereinabove mentioned drawbacks, by providing such a wall expansion small block which is effective to engage the set screw across its overall length, thereby preventing the set screw from disengaging even in highly stressed and vibration conditions.

Within that task, it is a main object of the present invention to provide such a wall expansion small block which, owing to its mentioned characteristics, is particularly effective to be used for hollow tile walls, or in walls therein gaps are formed, while being provided for a general purpose use.

Another object of the present invention is to provide such a wall expansion small block which, owing to its arrangement and construction, is very reliable in operation.

According to one aspect of the present invention, the above task and objects, as well as yet other objects which will become more apparent hereinafter, are achieved by a wall expansion small block characterized in that it comprises a substantially tubular cylindrical body, provided with a longitudinal slot extending through the overall length of said body, and effective to be inserted into a hole formed in said wall, the hollow or bore of said body, therein a screw may be engaged, having a first portion of enlarged diameter.

- 4 -

Further characteristics and advantages of
the wall expansion small block according to the
present invention will become more apparent from the
following detailed description of a preferred
embodiment of said block, being illustrated, by way
of an example and not of limitation, in the figures
of the accompanying drawing, where:

Fig.1 is a perspective view illustrating the
small expansion block according to the present
invention;

Fig.2 is a longitudinal cross-sectional view
of that same small expansion block;
and

Fig.3 is a schematic view illustrating the
small expansion block as applied to a hollow tile
wall.

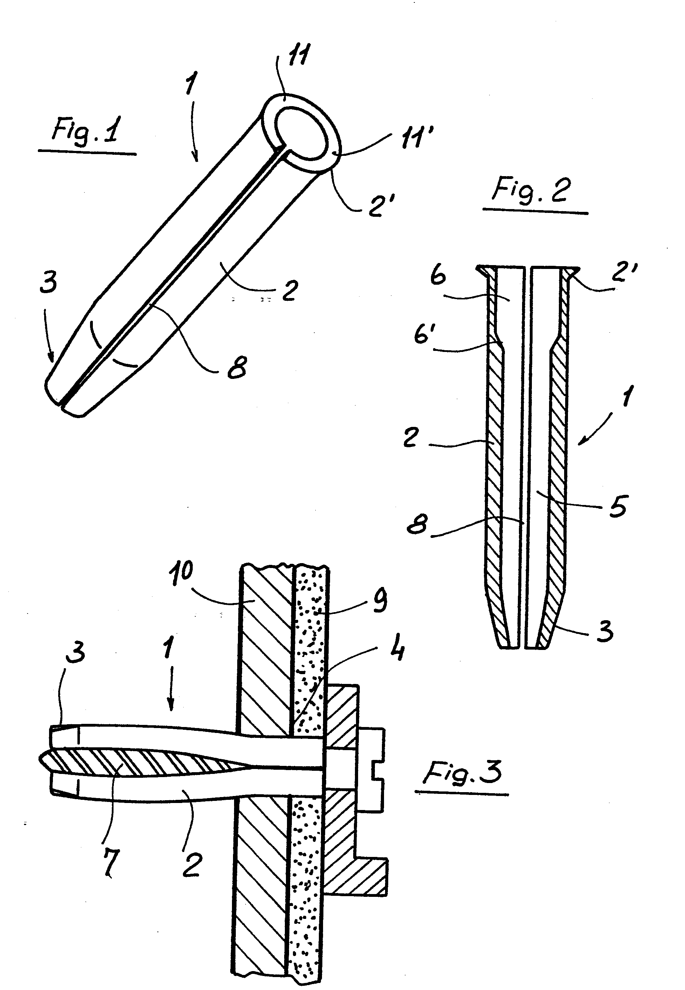

With reference to the above mentioned
figures, the wall expansion small block according to
the present invention, indicated overally at 1,
comprises a substantially cylindrical body 2, provided
with an abutment collar 2' which is preferably made
starting from a suitable plastics material.

That body defines, at its front end, in the
introduction direction of said body, an outer tapering
portion 3, of frustum shape, effective to facilitate
the insertion of said body into a hole 4 formed in
the wall.

In its inside the body 2 defines a hollow or
bore 5, extending for the overall length of said body
and provided, at its rear end portion, that is at that

-5-

end which will be flush with the wall, with an enlarged diameter portion 6, ending with a frustum shaped tapered zone 6' effective to act as a lead-in element for the set screw 7.

A main feature of the present invention is that the body 2 is provided with a longitudinal slot 8 which preferably extends through the overall length of said body and is effective to allow for said body to radially expand as the set screw is inserted thereinto which set screw 7, as it is known, has a diameter greater than the diameter of the hollow or bore 5, which latter is of elliptical shape, that is with a respective enlarged portion on either side thereof.

With the disclosed arrangement, the screw 7 engages the surface of the hollow 5, in the inside of the body 2, through the overall length of the small block, even if the latter is inserted into a hollow tile wall or into a wall therein gaps are formed.

As it is known, in this type of application, the conventional expansion small blocks, provided with a middle slot, tend to open and engage the set screw exclusively at the solid thickess of the tile or wall and, accordingly, they may disengage because of vibrations.

On the contrary, in the disclosed embodiment the complete engagement between the set screw and expansion small block affords the possibility of firmly anchoring the expansion block to the wall, thereby
the expansion block stabilizing effect will be
obtained not only at the wall thickness, but also
through the overall length of the expansion block,
with surprising practical results.

More specifically, the provision in the
inside of the expansion small block of a first
enlarged diameter hollow portion 6 which substantially
extends through the overall thickness of the
plastering 9 and hollow tile 10, affords the possibility
of inserting into said small expansion block set
screws having comparatively greater cross-sections
than the inner cross-section of that portion of the
expansion small block which protrudes from the tile
itself.

It should also be noted that the body 2 of
the expansion small block is provided with suitably
enlarged wall portions 11 and 11' which are such that,
as the set screw is introduced into the solid material
of a wall, it will be screwed into the expansion
block, whereas, as said screw passes through gaps of
the wall, it causes the body 2 of the expansion block
to expand at said gaps.

Thus, the body 2 tends to radially expand, in
such a way as to be firmly anchored in the wall, even
in the case of hollow tiles, thereby the engagement
between the wall and the small expansion block will
be reduced to a very small zone.

However, also in that case, the set screw will be fully engaged in the small expansion block, thereby
it will afford a sure coupling.

From the above disclosure and the figures
of the accompanying drawings, there will be self-evident
the great functionality and use facility characterizing the wall expansion small block according to the
present invention.

In particular it is to be pointed out that
the constructional approach of designing the body
2 with a single cut portion, consisting of the slot
8, is effective to prevent said body from being spread
apart and removed from the set screw; on the contrary
it will closely encompass said set screw, thereby
the latter will engage the expansion small block in
a very stable condition.

In practicing the invention, though the best
results have been obtained by using plastics materials,
the used materials may be any, depending on the
contingent requirements.

C L A I M S

1- A wall expansion small block characterized in
that it comprises a substantially tubular cylindrical
body (2), provided with a longitudinal slot (8)
extending through the overall length of said body,
and effective to be inserted into a hole (4)
formed in said wall, the hollow or bore (5) of said
body (2), therein a screw may be engaged, having a
first portion (6) of enlarged diameter.

2- A wall expansion small block, according to the
preceding claim, characterized in that said substantially cylindrical body (2) is provided, at the front
end portion thereof, in the body introduction direction,
with a frustum tapering portion (3), effective to
facilitate the insertion of said body (2) into said
hole (4), and, at the rear end portion thereof, with
an abutment collar (2').

3- A wall expansion small block, according to claim
1, characterized in that said hollow (5) is provided,
at the rear end portion thereof, with an enlarged
diameter portion (6) ending with a frustum shaped
tapering portion (6') effective to facilitate the
insertion of a set screw (7).

4- A wall expansion small block, according to one or
more of the preceding claims, characterized in that
the hollow or bore (5) of said tubular cylindrical body is of elliptical shape, that is it is provided with an enlarged portion on either side thereof.

5- A wall expansion small block, according to one or more of the preceding claims, characterized in that said longitudinal enlarged portions are so arranged and designed that, as the set screw is screwed through the wall solid material, it will be screwed into the expansion block body, whereas as said set screw (7) is screwed through gaps in the wall, it is effective to cause said expansion block body to expand.

6- A wall expansion small block, according to one or more of the preceding claims, characterized in that it comprises, in the inside thereof, a first enlarged diameter hollow portion (6) effective to extend through the overall thickness of the plastering and the hollow tile therethrough said hole (4) is formed, said portion (6) being also effective to afford the possibility of inserting into said hole (4) set screws having a comparatively greater cross-section than the inner cross-section of the portion of the expansion block protruding from the tile.

7- A wall expansion small block, according to the preceding claims and substantially as disclosed and illustrated for the intended objects.

Fig.1

11

1

11'

2'

3

2

8

Fig.2

6

6'

2'

2

1

8

5

3

10

9

1

4

3

1

7

2

Fig.3